# EUROPEAN PATENT SPECIFICATION

(11) **EP 1 799 025 B1**
(45) Date of publication and mention of the grant of the patent: **02.07.2014**
(21) Application number: 05790908.7
(22) Date of filing: 28.09.2005
(51) Int. Cl.: A01G 1/00, A01G 7/00

(54) **METHOD AND APPARATUS FOR DETERMINING A HARVESTING TIME**
VERFAHREN UND VORRICHTUNG ZUR BESTIMMUNG DER ERNTEZEIT
PROCEDE ET APPAREIL PERMETTANT DE DETERMINER LE MOMENT POUR MOISSONNER

(30) Priority: 29.09.2004 FI 20041263
(43) Date of publication of application: 27.06.2007
(73) Proprietor: Yara Suomi Oy, 02600 Espoo (FI)
(72) Inventor: KLEEMOLA, Jouko, FI-05900 HYVINKÄÄ (FI); PELTONEN, Jari, FI-04330 LAHELA (FI)
(74) Representative: Berggren Oy Ab
(86) International application number: PCT/FI2005/000413
(87) International publication number: WO 2006/035108

(56) References cited:
- GB-A- 1 197 087
- KARVONEN T ET AL: "A dynamic model for predicting the falling number of wheat grains in Scandinavian climatic conditions" ACTA AGRICULTURAE SCANDINAVICA, vol. 41, no. 1, 1991, pages 65-73, XP008058237 ISSN: 0001-5121 cited in the application
- TEITTINEN M ET AL: "A dynamic model for water and nitrogen limited growth in spring wheat to predict yield and quality" JOURNAL OF AGRONOMY AND CROP SCIENCE, vol. 172, no. 2, 1994, pages 90-103, XP008058228 ISSN: 0931-2250 cited in the application
- LAURILA L ET AL: "A dynamic model for predicting the falling number of rye grains in Finnish Ostrobothnian conditions" AGRICULTURAL SCIENCE IN FINLAND, vol. 1, no. 1, 1992, pages 57-71, XP008058236 ISSN: 0789-600X
- SMITH G P ET AL: "Models of wheat grain quality considering climate, cultivar and nitrogen effects" AGRICULTURAL AND FOREST METEOROLOGY, vol. 94, no. 3-4, May 1999 (1999-05), pages 159-170, XP008058234 ISSN: 0168-1923

## Description

The present invention relates to a method, apparatus, and system for determining the timing of harvesting.

One of the most important quality factors of baker's cereals, such as wheat or rye, is the falling number indicating the sprouting degree of the grains. The sprouting of the grains prior to harvesting is known as the hidden sprouting of the ear wherein the breakage of the dormancy is followed by the increase of the amylase activity to such high values causing decomposition of the storage starch valuable in industrial processes to give simpler sugars. This is often the case long before actual sprouts may become visible on the ear. For instance, the starch of wheat flour damaged by hidden sprouting is not able to bind moisture released from gluten during baking, thus resulting in a moist product having a broken texture and bad colour.

Evolution of the falling number during filling of the grain may be divided into three phases. The first phase begins from 1 to 3 weeks after emergence of the ear from the straw. Starch starts to build up in the grain accompanied by the increase of the falling number. During the development of the grain, the second phase called dormancy is attained. In this phase, the grain is resting and will not sprout. In these two phases, the falling number increases, the rate of increase being mostly influenced by the cereal variety used and the temperature. The development of the grain progressing, the third phase is reached wherein the dormancy is broken. In this third phase, the sprouting of the grain is possible provided the conditions around the grain are favourable therefor. Sprouting process is promoted by suitable relative humidity of the air and temperature changes. This third phase hollowing the breakage of the dormancy is critical with respect to the baking properties of the crop to be harvested from the field. Thus, the crop should be harvested prior to sprouting advancing too far.

Under favourable growth conditions, the amount of α-amylase enzyme is low in ripened grains, this amount rapidly inreasing when sprouting begins. It is known that the α-amylase activity will increase under rainy and cool growth conditions during grain filling. On the other side, high temperatures shorten the dormancy of the grains, possibly leading to a rapid decrease of the already high falling number in case of rain. Also the decomposition of the starch may decrease the amount of the crop. It is shown that the harvest level of wheat crop badly suffering from sprouting of the ears may be about 10 % lower than without sprouting.

In the production of wheat and rye, quality losses due to low falling numbers caused by hidden sprouting are particularly significant in some years in Finland, Sweden, Norway, Denmark, and UK, also in Estonia, Latvia, Lithuania, Russia and Germany. And in North America, there are wheat production areas where it may be hard to harvest crops having high qualities with respect to the falling numbers. Thus on the baker's grain market, the falling number is a significant quality property influencing the price.

To indicate any hidden sprouting, α-amylase activity in wheat and rye is measured prior to the use of the grain batch by the so-called Hagberg Falling Number Method (so-called Hagberg falling number, standard ISO 3093:1982). There is a strong inverse correlation between the falling number and α-amylase activity; that is, the lower the falling number, the higher the α-amylase content, and accordingly, the possibility for hidden sprouting.

In industrial processes, efforts are made to technically improve low falling numbers for instance by lowering the pH value, lowering water absorption of the dough, shortening the kneading time thereof, by using higher baking temperatures or adding natural α-amylase inhibitors to flours during dough preparation.

As to baking cereals, intensive development and research efforts have been made with respect to cultivation techniques and plant breeding to obtain high falling numbers of cereals still growing in fields and to keep the falling numbers high independent of the weather conditions. Evolution of the falling number is, however, a strongly hereditary property of the crop variety, and thus the stability of this quality property during cultivation may be influenced only little with technical cultivation solutions - except for the choice of the variety.

Already in the 1960's, the so-called humidity chamber testing method was developed for traditional selective breeding. In this method, individual ears are randomly picked after yellow ripening from the breeding line material. The ears are placed into chambers with 100 % relative humidity followed by the determination of the falling numbers of the ears after five, seven and ten days in the humidity chamber. A so-called "deterioration replica" is often left for field trials. Besides falling number determinations, observations on various damages of the variety during overripening thereof such as falling of grains may be made in this test area. Thus, the methods clearly describe the stability of the falling number of the varieties under very severe conditions for ear sprouting, and direct selection criteria of plant breeders (Kivi, E., "Spring wheat. Siemenjulkaisu 1970, 35 - 41, The Hankkija Plant Breeding Institute). Parental varieties with known high falling number stability are selected for crossbreeding. Falling numbers are indirectly influenced by strenght properties of the straws of cultivated plants since ears of varieties remaining erect even under humid conditions will dry faster than those of varieties with straws that lay down.

At present, estimations of the development of the falling number are obtained with a service provided by MTT Agrifood Research Finland, and Pro Agria Finland wherein various wheat and rye varieties are sown to give test squares. The development of the falling number of these varieties is monitored 2 - 3 times a week, starting one or two weeks prior to expected harvesting. Results from this service describing the development tendencies of the falling numbers of said varieties during the passed growth period may be delivered to farmers by telephone, newspaper advertisments, or the Internet. However, relevant information on the behaviour of the falling number e.g. in the next five days is not available. Differences in falling numbers due to different weather factors between the crop fields and the site of measurement, or different sowing times, that is different development stages of the varieties are not taken into consideration in this service. Accordingly, this service is more or less approximative. In addition, there are only few local stations monitoring falling numbers. In Finland, there are about three stations per 130-000 hectares of baker's cereals. That is, present falling number services are not able to provide real-time data on the development of the falling number in the fields of the farmer for optimization of the harvesting.

Variation of the temperature and especially rainfall having a significant influence on the development of the falling number is so high within distances of few lens of kilometers that only an approximation of the level of the falling number maybe obtained by monitoring the development of the failing number based on comparatives measurements between measuring stations, irrespective of the fact weather the falling number is rising or falling in the near future. Moreover, the results of the method have no predictive value since weather forecasts are not taken into consideration. Thus, the existing methods alone are not able 40 give solutions for the farmer to control the variation of the falling numbers between field sectors.

The temperature and rainfall having a strong effect on the falling number, weather parameters may be used as input data in mathematical models predicting the development of falling numbers during the growth period. Basic research for mathematical modelling of the falling numbers e.g. for wheat and rye has been carried out. General description of the models for wheat and rye is disclosed by Karvonen and Varis in Mathematical models in crop production, 1992, Publication no. 32 178 - 202, Department of Plant Production, Helsinki University, Finland. The applicability of the models using neutral variety and weather data has been further tested as disclosed by M. Teittinen, T. Karvonen and J. Peltonen in A Dynamic Model for Water and Nitrogen Limited Growth in Spring Wheat to Predict Yield and Quality, 1994, J. Agronomy & Crop Science 172, 90 - 104, Department of Plant Production, Helsinki University.

Mathematical models are suitable for predicting the falling numbers of e.g. wheat and rye provided the prediction is corrected a few times during the growth period by means of practical falling number measurements from the fields (comparative measurements). In fact, the reliability of mathematical models is not high enough for obtaining solid predictions at a certain farm without comparative measurements from the surroundings. However, farmers have no possibility for such comparative measurements not only because expensive analytical devices according to the assay standard are lacking. Activities of individual farmers on single farms or field sectors may not be guided by the above method providing comparative measurements at few testing stations around Finland since the number of these stations is too low.

Also in England, a study for predicting falling numbers using weather data has been carried out (Atkinson, M.D. et al., 2003, Forecasting wheat quality and the breadmaking premium from the North Atlantic Oscillation, HGCA Project Report 308, UK). This study was not directed to monitoring of the real-time falling number at individual field sectors, but to regional prediction thereof within counties in spring, several months before actual growth period.

It is known for those skilled in the agricultural art that the variation of the falling number may be very high in separate fields due to different sowing times and local variations of the temperature and rainfall. On any day in August as the harvesting time is approaching, falling numbers of two separate fields may be very different in case sowing was carried out in one of the fields one or two weeks earlier than in the other. In the early sown field sectors, the falling number may rapidly fall in case of rain, which makes quick harvesting important to maintain the falling numbers high. In the field sectors sown later, harvesting may still wait since the grains are still dormant and thus, the falling number will not be decreased by rain. Accordingly, it would be valuable for the farmer to know the development of the falling number under prevailing and forecasted weather conditions for harvesting at the right moment.

Now, a method, an apparatus, a system and a computing program for predicting the falling number more locally and better in real-time to determine the harvesting time of the crop has been found by adding data on the cultivated plants, growth site, and site and time specific weather data as input data for the .computing program, and further by calibrating falling number parameters used for comparative measurements.

Characteristic features of the invention are presented in the independent Claims.

With the method and apparatus of the invention, the right time for harvesting with respect to the falling numbers, and thus the order of harvesting of crops cultivated in different field sectors is determined by computing the local real time falling number prediction separately for each cultivation by means of a computing program wherein data on the cultivated crop, site of the cultivation of the crop, and local weather data for the site of the cultivation are used as input data. In the invention, comparative data measured at reference farms are also used as input data for calibrating the computing parameters. The decision for harvesting may be made by comparing the predictions obtained for different cultivations with each other and/or with the target value.

In the examples of the invention, data on the cultivated crop, site of the cultivation of the crop, and local weather data necessary as the input data may be obtained from the farmer himself or from common or commericial sources.

In one application, data on the cultivated crop to be used as input data are obtained e.g. from the cultivator of the crop plant, this data typically including information about the cereal variety, such as about wheat, rye or ryewheat varieties. The spring wheat varieties preferably includes the varieties Anniina, Kruunu, Mahti, Manu, Piccolo, Tjalve, and Triso, or another similar variety. Preferably, the autumn wheat varieties include Aura, Rehti, and Urho, or another similar variety. Preferable rye varieties include Akusti, Elvi, Kartano, Picasso, Riihi, and Voima, or another similar variety. Preferable ryewheat varieties include Modus, Tricolor, and Focus, or another similar variety.

In the method according to an embodiment of the invention, the computing program to be used for the falling number prediction should comprise data on the growth properties of the selected crop to carry out the computing. Moreover, in case of spring cereals, for instance the sowing date of the cereal variety, or the date of the beginning of the growth period for autumn cereals is included to the data on the cultivated crop.

Data on the site of the cultivation of the crop typically comprise site data of the farm or field in question, suitably connected to local weather data.

Local weather data comprise weather data e.g. temperature and precipitation measured at a certain location at a certain time. Conveniently, the nearest weather station is chosen based on the data on the site of the cultivation, and values measured there are used. Most preferably, the farmer himself has a weather station, the weather data thus being as site-specific as possible. Local weather data are provided in Finland also by other common or commericial sources such as Finnish Meteorological Institute, or Foreca. Weather data used as input data are based on actually obtained weather data as well as forecasts about the future weather. Actual weather data are typically collected during the whole growth period of the crop, whereas, according to the desired accuracy, the predicted data cover a few days or weeks following the observation moment.

If necessary, comparative data measured at reference farms, preferably at the nearest reference farm, that is, experimentally determined falling number values are used in the computing program to calibrate the computing parameters of the falling number. This comparative data may also be obtained from the computing program service provider, that is, the service provider may maintain a considerably comparative data stores (such as comparative data bank), from which the farmer may pick the necessary comparative data for calibration of the falling number fortecast. This may be the case if the comparative data are not automatically provided by the computing program.

In a determination of the invention, the results of the comparative measurements are used to improve the accuracy of the falling number prediction, and to calibrate the computing parameters. These analytical results obtained form the nearest reference farms are used as input data in the computing program for the falling number prediction. Preferably, measurement of the comparative results and falling number prediction therewith is started as the filling phase of the cereal grain starts. In an embodiment, the calibration is carried out by minimizing the sum of squares of the difference of the falling numbers computed with the model, or respectively, measured in the field. In the computing program, the sum of squares is minimized by adjusting the computing parameters of the falling number model. This calibration method is for instance the method of the lowest sum of squares commonly known in statistics.

So far, these comparative measurements on cultivations of reference farms are carried out in Finland only by a few research stations. Typically, the farmers are not in the position to carry out these measurements themselves, nor it is convenient not only because of the expensive analytical devices necessary according to the assay standard.

As the computing program for falling number prediction, the model suitable for forecasting falling numbers disclosed for instance by Karvonen, T. and Peltonen, J.A. in Dynamic model for predicting the falling number of wheat grains in Scandinavian climatic condition, Acta Agric. Scand. 1991, 41, 65 - 73, may be used, combined with the model describing the development rhythm of the plants (Kleemola, J., Effect of the temperature on phasic development of spring wheat in northern conditions, Acta Agric. Scand. 1991, 41, 275 - 283). Combination of the computing models may for instance be as follows. The falling number model simulates the development of the falling number of the cereal grain since the beginning of the grain development. The development of the grain starts in a certain development phase of the plant determined by the model describing the development rhythm of the plant. A special computing model should be used to determine this development phase, since it is attained in different years and with different cereal varieties at different times (for instance not always on the 1^{st} of July). The development rhythm model is thus used to determine the beginning of computing in the falling number model.

In one embodiment of the invention, the computing program for falling number prediction is available to the farmer for instance in the Internet. The computing program may be arranged in the data network to allow access to the client version of the system through the farmer's private terminal connected via the Internet to the server with the computing program. Alternatively, the computing program may be browser-based, that is, an Internet browser allows connection to the computing program server of the Internet.

In some applications of the invention, the farmer may be connected on-line to the computing program server using a mobile communication means. The service provider may organize a service arrangement for sending information, if necessary, to the farmer for the harvesting decision to his mobile communication device (e.g. an SMS to a mobile telephone). This may be a preferable arrangement, if for instance the weather forecast is rapidly changing, thus allowing the farmer to start the harvest at the right moment.

In one method of the invention, the farmer contacts the computing program for falling number prediction, enters input data, and preferably chooses the nearest reference farm. On the basis of the information obtained, the farmer gets as the result a prediction of the falling number development, and accordingly, he may or may not start the harvesting on the field sector covered by the forecast. According to one preferable embodiment, if the farmer wants to make a falling number survey for one of his fields, he starts a counting program present e.g. in the Internet. First, the nearest reference measuring station, the sowing time of the reference field and the variety cultivated on the field to be monitored are entered to the program by the farmer. Falling number measurements carried out in reference field are found from the data base of the program. The provider of the falling number program enters weather data, variety data and falling numbers of the reference measuring stations to the data base of the program. In the program, the computed development of the falling number is optimized by means of comparative measurements, on the basis of weather data, by adjusting the parameters of the model predicting the falling numer. The method of the lowest sum of squares is used for optimization. The development of the crop is computed according to Kleemola, J., Effect of temperature on phasic development of spring wheat in northern conditions, Acta Agric. Scand. 1991, 41, 275 - 283, whereas the development of the falling number is computed according to Karvonen, T. and Peltonen, J.A., Dynamic model for predicting the falling number of wheat grains in Scandinavian climatic condition, Acta Agric. Scand. 1991, 41, 65 - 73. Following the optimization of the computing result, the farmer enters to the program the sowing date of the field to be monitored and chooses the weather station nearest to his farm. Then, the development of the falling number for the field in question is computed by the program by means of the computing parameters obtained as the result of the optimization, and data from the nearest weather station. Data from the weather station also includes temperature and rain forecasts for the next week, thus allowing the farmer to plan necessary measures for some days in advance. Preferably, most optimal data are available to the farmer if his farm has its own weather station, the data of which may be fed to the weather data base of the falling number program. According to the estimated falling number development, the farmer may carry out the harvesting of the industrially useful crop of the variety in question in different fields.

Typically, a target value for the falling number indicating the quality of the crop is set by the farmer. Once this target value is reached, harvesting should be carried out. At this point, the value of the crop is highest for the farmer, and further, for instance when the falling number is more than 200 units, the wheat crop is suitable for industrial use. The target value may preferably vary according to the cultivated cereals and/or location/time. For instance a specific target value is used for rye bread or traditional Finnish Easter porridge made of malted rye. That is, different target values may perferably be selected according to desired properties of the final product made from this crop. Moreover, the target value may be specific to the cultivated plant, or quality of the cultivated plant, and may be based on the opinion of the farmer about the desired properties of the crop.

However, if the target value for the falling number is reached simultaneously in several field sectors, the farmer must choose a reasonable order of harvesting of these fields. In this case, with an application of the method of the invention, the order of harvesting of the field sectors may be determined according to the predicted falling numbers.

In an application of the invention, monitoring of the falling number may be started few weeks prior to harvesting, and if the predicted value obtained is still below the target value, harvesting may be postponed while repeating the prediction till the target value is reached. Once this is done, harvesting may be started, or it is possible to keep waiting and follow the development of the falling number by means of the falling number prediction till the maximum value is reached and starts to fall.

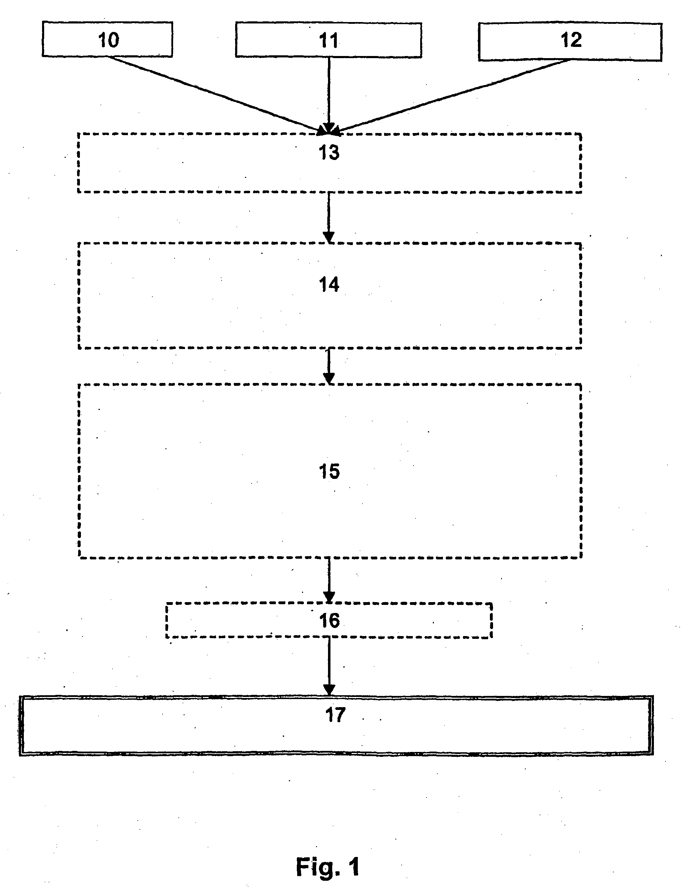

Now a block diagram of the steps of the computing program according to an application of the invention is presented with reference to Figure 1. The farmer or the user of the computing program feeds the selected variety (10), and the sowing date (11) and selects the weather station (12) as input data. The computing program receives this input data. Next, the computing program finds the reference station nearest to the selected weather station (13). The falling number may thus be measured. At 14, the parameters of the falling number model are calibrated by means of the falling numbers measured at the reference station, and weather data from the weather station nearest to the reference station. Preferably, the computing program may automatically search the data needed at 14. At 15, the computing program controls if nearest weather station selected by the user is the same used for calibration. If this is not the case, the falling number is recomputed, i.e. localized by means of the data from the selected station using the parameters calibrated in the previous step 14. In case the station selected by the user and station used for calibration is the same, there is no need to repeat the computing. At 16, the computing program has produced a final result shown to the user, e.g. the farmer. Based on the result, the user may preferably draw conclusions about harvesting according to the prediction of the falling number model. In Figure 1, the procedures of the user of the computing program have a continuous border line, whereas the procedures carried out by the computer program have a broken border line.

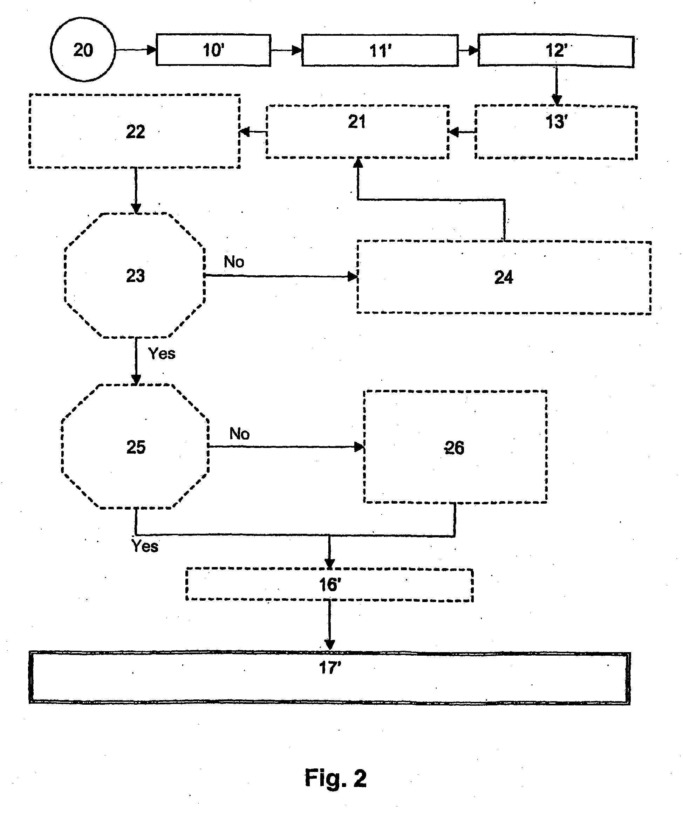

Now a block diagram of the steps of the computing program According to another application of the invention is presented with reference to Figure 2. The diagram starts with 20 where the user opens the computing program for instance by opening the Internet site thereof. Also in this application, the farmer or the user of the computing program feeds the selected variety (10'), and the sowing date (11') and selects the weather station (12') as input data. The computing program receives this input data. Next, the computing program finds the reference station nearest to the selected weather station (13'). Then, the computing program computes a preliminary falling number value for the selected crop variety at 21. This obtained value is compared to reference values measured for instance at the reference station (22). At 23, the computing program verifies if these values are close to each other. If the comparison at 23 shows that the values are not close enough, the computing program changes the parameters at 24. Step 24 is preferably carried out by minimizing the sum of squares of the computed and measured falling numbers. From 24, the computing program returns to 21 wherein the preliminary falling number is redetermined. If the comparison at 23 shows that the values are not close enough, the computing program controls at 25, if the selected weather station is the same as the reference station. If this is not the case, the falling number is determined by the computing program by means of the parameters calibrated as above, and data from the selected weather station at 26. Otherwise the process is continued at 16' where the computing result is shown to the user. Based on this, the user may preferably draw conclusions about harvesting according to the prediction of the falling number model. Also in Figure 2, the procedures of the user of the computing program have a continuous border line, whereas the procedures carried out by the computer program have a broken border line.

In the working examples of Figures 1 and 2, the model disclosed by Kleemola, J. in Effect of the temperature on phasic development of spring wheat in northern conditions, Acta Agric. Scand. 1991, 41, 275 - 283, is used for computing the development rhythm of the plants, and the development of the falling number is determined according to Karvonen, T. and Peltonen, J.A., Dynamic model for predicting the falling number of wheat grains in Scandinavian climatic condition, Acta Agric. Scand. 1991, 41, 65 - 73. These models are preferably combined by the computing program. Further, the results deduced from the models are preferably calibrated by the computing program by means of the method of the lowest sum of squares, with comparison thereof to the target value.

Now, without limiting the invention, examples of the application thereof are presented. In these examples, applications of the invention are described by unpublished confidential experimental arrangements.

### Example 1

A farmer 1 living in Vihti was busy because of activities outside the farm, and he wanted to find out, whether the harvesting of the spring wheat of the Tjalve variety cultivated in the large field sector sown last was already due considering the falling number, or could harvesting still be postponed to be carried out later without pressure.

In September, the 4^{th} 2003, the farmer contacted through the Internet the Falling Number Model program computing predictions for falling numbers. The development rhythm of the plant and the development of the falling number are computed by this computer program according to Kleemola, J., Effect of the temperature on phasic development of spring wheat in northern conditions, Helsinki University, 1991, and Karvonen, T. and Peltonen, J.A., Dynamic model for predicting the falling number of wheat grains in Scandinavian climatic condition, Helsinki University, 1991. He used the Tjalve spring wheat variety cultivated on his farm and the sowing date thereof, the 5^{th} of May, 2003, as the input data in the computing program of the falling number. Further, he fed to the program the place of residence, Vihti, as input data for determining the nearest weather station.

Collected local (Vihti) weather data up to the date of computing, and local (Vihti) weather forecast for the next 10 days were used by the computing program of the falling number as the weather data (collected actual data: Finnish Meteorological Institute, forecast till September, the 14^{th}: SMHI, Sweden).

In Vihti, falling numbers are also measured experimentally from reference fields near the weather station at the testing plant of MTT Agrifood Research Finland, and these data are fed to the Falling Number Model Program by the update provider (Kemira).

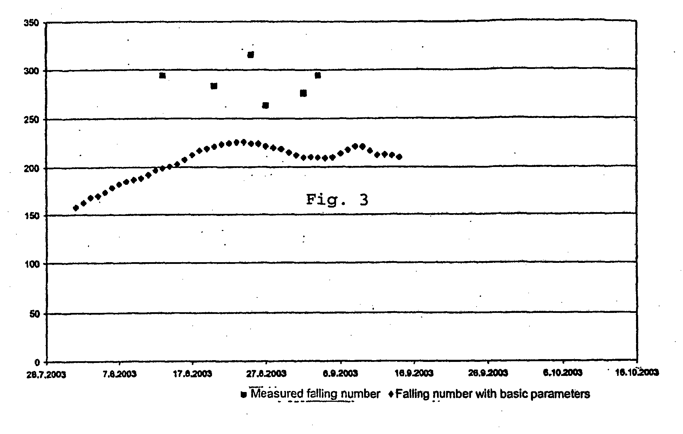

The prediction shown in Figure 3 was first computed by the program on the basis of the measured falling number data. That is, Figure 3 shows the computed result of the falling number using default parameters. The figure shows that the computed result is clearly lower than the values measured from the reference fields, and thus the farmer would get a false impression about the quality of the crop cultivated in the field on the basis of this computed result as such. Based on the success criteria, i.e. the root mean square error (RMSE) of the prediction fed to the program it was found (RMSE of the prediction less than 50) that the prediction computed using basic parameters deviated too much from the falling numbers measured in Vihti, suggesting that the computing parameters should be calibrated. This first computing result was not shown to the farmer 1, but the data processing was continued in the corrective computing cycle.

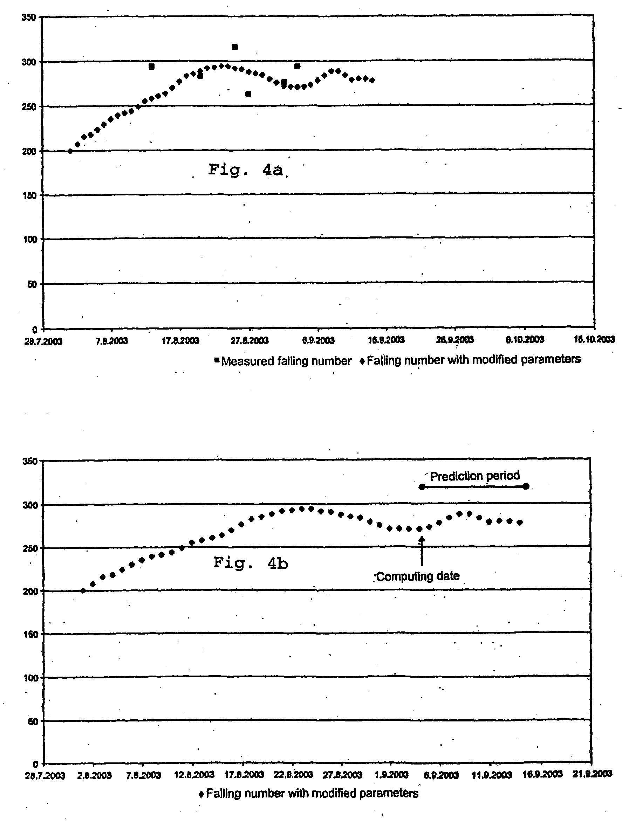

In the falling number program, the computing parameters were automatically calibrated using the method of the lowest sum of squares to bring the calculated and measured falling numbers closer. Figure 4a shows the computing result of the falling number following the calibration of the default parameters. Now, the measured and calculated values match, the model thus giving a reliable survey of the real crop quality. The Figure thus shows the results obtained after calibration with corrected computing parameters. Based on the success criteria, the calibration is now successful, and thus the result was presented to the farmer 1 in form of Figure 4b. Figure 4b is the figure presented to the farmer in the situation of Example 1. The farmer sees from the figure that the level of the falling number is good, and will not decrease during the forecast period in an undesired manner. There is thus no hurry to carry out the harvesting.

The farmer was able to deduce from Figure 4b that the level of the falling number was good and would not fall in the next few days on the basis of the prediction, and accordingly, the crop quality would not substantially decrease. So he decided to use the next days for more urgent works and postpone the harvesting

### Example 2

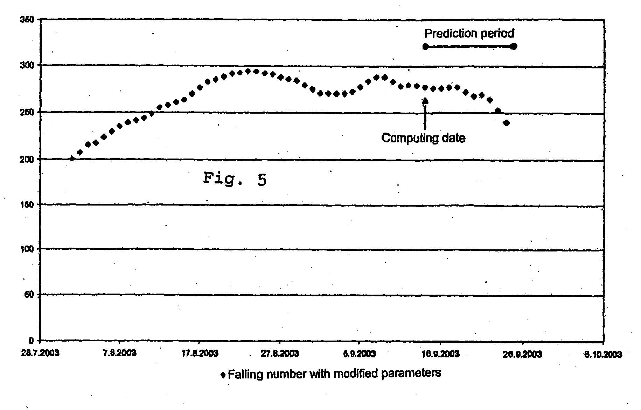

According to Example 1, on the 13^{th} of September, 2004, a new prediction for the falling number was made by the farmer after urgent works. A new prediction was computed by the program from the input data and further weather data, now actual weather data being available till the 15^{th} of September, and forecasts till the 25^{th} of September. Figure 5 shows the picture about the situation of Example 2 presented to the farmer. The farmer sees that the falling number is at correct level at the computing moment, but starts to fall at the end of the prediction period. This falling indicates to the farmer that harvesting of the crop is urgent. The farmer 1 thus saw from the figure that the falling number may be rapidly decreased at the end of the prediction period by approaching rain, and he decided to start the harvesting immediately to harvest from the field a wheat crop having a quality suitable for baker's applications, that is, having a falling number of above 200 seconds. Once the falling number is decreasing, the rain would have caused rapid decrease threof under the limit defining the baker's cereal quality (200 seconds).

### Example 3

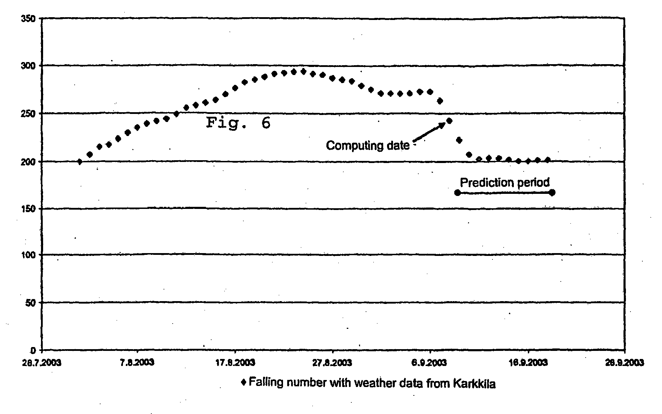

Farmer 2 had fields in Karkkila, at a distance of 20 kilometers from a weather and falling number measuring station in Vihti. He selected the weather station located in his home area, near his farm. Weather data for Karkkila were in this-case almost the same as for Vihti, only precipitation within the period between the 6^{th} and the 8^{th} of September was clearly higher than in Vihti. On the basis of the falling number prediction made by the farme 2 on the 8^{th} of September, he decides to start the harvesting immediately since the falling number in his fields seemed to be clearly decreasing already (Figure 6. Picture shown to the farmer in the situation of Example 3. Falling number is decreasing as the prediction is made, thus indicating that the harvesting is overdue because of the rain.) Any further rain would have made the situation even worse.

Had the farmer 2 only obeyed measuring results according to present methods, he might have postponed the harvesting and thus lose the possibility of a high quality harvest with a corresponding falling number.

The crop harvested on the basis of the prediction corrected for local weather data had high quality. The prediction program was run as in Example 1 except that after calibration, a new prediction was computed for Farmer 2 (Figure 4) on the basis of the weather data from the weather station in Karkkila.

### Example 4

Farmer 3 wanted to sow spring wheat of the Anniina and Kruunu varieties in his farm in Vihti, the total sown area being 100 hectares. He selected two varieties differing with respect to the ripening time to reduce the risk of falling number variation due to the weather during the harvesting period. On the other hand, the fields of the farmer consist of 15 sectors of different size, the sowing of the cultivations thus taking at least five days for logistic reasons (transfer of the machines and refuelling thereof).

He started the sowing on the 5^{th} of May, 2003 with the wheat of the Kruunu variety, the growth period of which is two days longer, finishing the sowing on the 8^{th} of May, 2003. The cultivation area of the Kruunu wheat totals about 60 hectares. The remainig 40 hectares were sown with the Anniina wheat on the 8^{th}, and 10^{th} of May, 2003. More specific sowing data and areas of the sectors are presented in Table 1.

**Table 1**

| Sector | Area | Date of sowing in 2003 | Wheat variety | Falling number prediction on the 4^{th} of Sept. | Falling number prediction on the 9^{th} of Sept. | Falling number prediction on the 10^{th} of Sept. |
|---|---|---|---|---|---|---|
| 1 | 5,5 | 8.5. | Anniina | > 250 | about 200 | - |
| 2 | 10,2 | 5.5. | Kruunu | about 200 | - | - |
| 3 | 14,0 | 9.5. | Anniina | > 300 | > 250 | > 250 |
| 4 | 2,1 | 8.5. | Anniina | > 250 | > 250 | about 200 |
| 5 | 1,5 | 8.5. | Anniina | > 250 | > 250 | about 200 |
| 6 | 4,2 | 7.5. | Kruunu | > 220 | < 200 | - |
| 7 | 6,7 | 5.5.-6.5. | Kruunu | about 200 | - | - |
| 8 | 4,3 | 7.5. | Kruunu | > 220 | about 200 | - |
| 9 | 11,7 | 10.5. | Anniina | > 300 | > 300 | > 250 |
| 10 | 3,1 | 8.5. | Anniina | > 300 | > 250 | about 200 |
| 11 | 1,7 | 8.5. | Anniina | > 300 | > 250 | about 200 |
| 12 | 13,2 | 6.5.-7.5. | Kruunu | > 220 | about 200 | - |
| 13 | 7,2 | 6.5. | Kruunu | > 220 | > 220 | about 200 |
| 14 | 1,6 | 8.5. | Anniina | > 300 | > 300 | > 250 |
| 15 | 13,0 , | 8.5. | Kruunu | > 220 | about 200 | - |

For the falling number computing, the farmer used the computing program in the Internet. He made the first prediction on the 4^{th} of September, as the harvesting time was approaching. For computing of the predictions, he used the sowing time, and variety data of the field sector as the input data of the computing program of the falling number prediction. Weather data collected by the nearest weather station in his home town, Vihti, were used. The weather data is presented in Table 2.

**Table 2**

| Date | Mean temp., °C | Max. temp., °C | Precipitation, mm | Note |
|---|---|---|---|---|
| ... | | | | |
| 28.8. | 11.8 | 15.5 | 0.9 | actual |
| 29.8. | 10.25 | 15.4 | 0 | actual |
| 30.8. | 10.55 | 11 | 0 | actual |
| 31.8. | 6.35 | 11 | 0 | actual |
| 1.9. | 5.2 | 10.1 | 0 | actual |
| 2.9. | 6.2 | 14.5 | 0.1 | actual |
| 3.9. | 13.45 | 17.2 | 3.3 | actual |
| 4.9. | 11.7 | 18.9 | 0 | forecast |
| 5.9. | 12.6 | 20.9 | 0 | forecast |
| 6.9. | 13.5 | 20.9 | 0 | forecast |
| 7.9. | 13.25 | 22.1 | 0 | forecast |
| 8.9. | 14.45 | 20.8 | 0 | forecast |
| 9.9. | 10.6 | 17.7 | 1.3 | forecast |
| 10.9. | 11 | 13.8 | 1.1 | forecast |
| 11.9. | 12 | 14.7 | 1.5 | forecast |
| 12.9. | 13.95 | 18.9 | 0 | forecast |
| 13.9. | 11.85 | 18.2 | 2 | forecast |
| 14.9. | 13.8 | 16.3 | 0.4 | forecast |

Weather data actually obtained in the period between the sowing date and the computing date, and the local forecast for the next 10 days, starting from the date of the computing of the prediction through the 14^{th} of September, were used as the weather data. The farm was provided with a precipitation measuring station, and data therefrom were fed to the falling number program because of the difference from the data of the official weather station. With the computing program of the prediction, falling number predictions for each sector were determined as in Example 1 on the basis of the input data according to a computing model (Kleemola, J., Effect of the temperature on phasic development of spring wheat in northern conditions, Acta Agric. Scand. 1991, 41, 275 - 283; and Karvonen, T. and Peltonen, J.A., Dynamic model for predicting the falling number of wheat grains in Scandinavian climatic condition, Acta Agric. Scand. 1991, 41, 65 - 73), taking any need for calibration of the computing parameters into account. A falling number of 220 seconds is set as the target by the farmer, such falling number property providing the maximum price per kilogram of the wheat produced.

Based on the computed prediction, the farmer decides to start the harvesting in the sectors 2 and 7, since according to the prediction, the falling number thereof will decrease within the next ten days below the set limit value.

The precipitation on the farm was 7 mm on the 5^{th} of September. After harvesting the sectors 2 and 7, a new prediction was computed on the 6^{th} of September for the remaining 13 sectors. According to the prediction, in sector 6, there was a risk for the falling number of the Kruunu wheat to fall below 200 units, also for the Anniina wheat, the falling number was decreasing in sector 1. The crop volume of the sector 1 being higher, the farmer decided to harvest it first, followed by harvesting of the sector 6. Then the sectors 15, 12, and 8 were harvested. Just in case, the crop harvested from the sector 6 having a doubtful falling number was placed in a separate storage silo not to deteriorate the wheat having a proper quality.

On the 10th of September, it started to rain over the farm very early in the morning, the precipitation being 13 mm. A falling number prediction was determined by the farmer for the remaining sectors. On the 10th of September in the afternoon, when the cultivations was again dry, first the harvesting of the last Kruunu wheat sector (sector 13), followed by that of the Anniina wheat were carried out. The weather being sunny and dry in the next days, the wheat was harvested in the order of increasing falling numbers, i.e. starting with low falling numbers (about 200) in the sectors 4, 5, 10, 11, followed by higher falling numbers (> 250) in the sectors 3, 9, and 14, to reach the economically optimum falling number in each field sector. The harvesting was completed on the 13th of September.

## Claims

1. Method for determining a harvesting time, **characterized in that** a local real-time falling number prediction is separately determined for each cultivation by means of a computing program wherein
a. data on growing properties of the cultivation,
b. data on site of the cultivation,
c. local weather data for the site of the cultivation, and
d. comparative data
are used as input data for determining the falling number prediction, and the failing number predictions for different cultivations may be compared to each other and/or to a predetermined target value to determine the harvesting decision.

2. Method according to claim 1, **characterized in that** said falling number prediction is determined more that once at different times by using local data for these different times as input data.

3. Method according to claim 1, **characterized in that** data on the cultivation at least comprise data on the variety and the date of beginning of the growth.

4. Method according to claim 3, **characterized in that** said data on the variety is the cereal variety, preferably wheat, rye, or ryewheat.

5. Method according to claim 3, **characterized in that** the data on the date of the beginning of the growth is the sowing date for spring cereals, and the date of the beginning of the growth period for autumn cereals.

6. Method according to claim 1, **characterized in that** data on site of the cultivation is the location of the farm or field sector.

7. Method according to claim 1, **characterized in that** the local weather data contains obtained weather data and/or forecasted weather data.

8. Method according to claim 7, **characterized in that** said local weather data comprise local precipitation and temperature for a specific place within a specified period, or at a specified time, respectively.

9. Method according to claim 1, **characterized in that** the target value is the falling number estimated in advance or desired by the farmer for the crop.

10. Method according to claim 9, **characterized in that** the target value is characteristic for the variety, defined by the farmer.

11. Method according to claim 1, **characterized in that** said prediction of the falling number is presented in a graphic, alpha numeric or verbal form for a specific period of time enabling the harvesting decision to be made within this specific preriod of time.

12. Method according to claim 1, **characterized in that** comparative data are falling number data measured at reference farms or measuring stations.

13. Method according to claim 1, **characterized in that** comparative data are falling number data measured at the nearest reference farm.

14. Method according to claim 1, **characterized in that** the computing program used for the prediction is adjusted to find a suitable reference station with respect to the location of the cultivation.

15. Method according to claim 1 or 14, **characterized in that** the computing pyrogram used for the prediction is adjusted to compare the input data to data from the reference stations.

16. Method according to claim 1, 14 or 15, **characterized in that** the computing program used for the prediction is adjusted to calibrate the computing result by minimizing the sum of squares of the computed and measures falling numbers.

17. Method according to claim 1, **characterized in that** the computing of the prediction is carried out through the Internet, the computing software being located at an Internet server and the client version thereof at a terminal connected to said server.

18. Method according to claim 1, **characterized in that** the computing program is adjusted to send information for the harvesting decision to a mobile communication means of user of a computing program.

19. Optimization of the falling number of a cultivation and/or maximizing the yield thereof by means of the method of claim 1.

20. Apparatus for determining a harvesting time for cultivations, **characterized in that** said apparatus comprises a computing program for determining a local real-time falling number prediction for a cultivation wherein the computing program is adjusted to compare the falling number computed for the cultivation to a reference falling number for determining the local real-time falling number prediction.

21. Apparatus according to claim 20, **characterized in that**
a. data on the growing properties of the cultivation,
b. data on the site of the cultivation,
c. local weather data for the site of the cultivation, and
d. comparative data for determining a falling number prediction are used as input data for the computing program.

22. Apparatus according to claim 20, **characterized in that** the computing program is adjusted to calibrate the falling number prediction by minimizing sum of squares of the computed and reference falling numbers.

23. System for determining a harvesting time for cultivations, **characterized in that** said system comprises means for determining a local real-time falling number prediction for a cultivation by using
a. cultivation data,
b. data on the site of the cultivation,
c. local weather data for the site of the cultivation, and
d. comparative data for determining the falling number prediction as input data.

24. Computing program for determining a harvesting time for cultivations, **characterized in that** said computing program comprises means for determining a local real-time falling number prediction for a cultivation by using
a. data on the growing properties of the cultivation,
b. data on the site of the cultivation,
c. local weather data for the site of the cultivation, and
d. comparative data for determining the falling number prediction as input data.

## Patentansprüche

1. Verfahren zur Bestimmung einer Erntezeit, **dadurch gekennzeichnet, dass** eine lokale Echtzeit-Fallzahlvorhersage für jede Kultur mithilfe eines Berechnungsprogramms getrennt bestimmt wird, wobei
a. Daten über die Wachstumseigenschaften der Kultur,
b. Daten über den Standort der Kultur,
c. lokale Wetterdaten für den Standort der Kultur und
d. Vergleichsdaten
als Eingabedaten zur Bestimmung der Falldatenvorhersage verwendet werden und die Falldatenvorhersagen für verschiedene Kulturen miteinander und/oder mit einem vorgegebenen Zielwert verglichen werden können, um die Ernteentscheidung festzulegen.

2. Verfahren nach Anspruch 1, **dadurch gekennzeichnet, dass** die Fallzahlvorhersage mehr als einmal zu verschiedenen Zeiten bestimmt wird, indem lokale Daten für diese verschiedenen Zeiten als Eingabedaten verwendet werden.

3. Verfahren nach Anspruch 1, **dadurch gekennzeichnet, dass** Daten über die Kultur mindestens Daten über die Sorte und das Datum des Wachstumsbeginns umfassen.

4. Verfahren nach Anspruch 3, **dadurch gekennzeichnet, dass** die Daten über die Sorte die Getreidesorte, vorzugsweise Weizen, Roggen oder Roggenweizen, angeben.

5. Verfahren nach Anspruch 3, **dadurch gekennzeichnet, dass** die Daten über das Datum des Wachstumsbeginns für Sommergetreide das Datum der Aussaat und für Wintergetreide das Datum des Beginns der Wachstumsperiode angeben.

6. Verfahren nach Anspruch 1, **dadurch gekennzeichnet, dass** die Daten über den Standort der Kultur die Lage des landwirtschaftlichen Betriebs oder des Feldabschnitts angeben.

7. Verfahren nach Anspruch 1, **dadurch gekennzeichnet, dass** die lokalen Wetterdaten beschaffte Wetterdaten und/oder vorhergesagte Wetterdaten sind.

8. Verfahren nach Anspruch 7, **dadurch gekennzeichnet, dass** die lokalen Wetterdaten einen örtlichen Niederschlag und eine örtliche Temperatur jeweils für einen speziellen Ort in einem vorgegebenen Zeitraum oder zu einer vorgegebenen Zeit umfassen.

9. Verfahren nach Anspruch 1, **dadurch gekennzeichnet, dass** der Zielwert die Fallzahl ist, die im Voraus abgeschätzt wurde oder vom Bauern für die Feldfrüchte gewünscht wird.

10. Verfahren nach Anspruch 9, **dadurch gekennzeichnet, dass** der Zielwert charakteristisch für die vom Bauern festgelegte Sorte ist.

11. Verfahren nach Anspruch 1, **dadurch gekennzeichnet, dass** die Vorhersage der Fallzahl in einer grafischen, alphanumerischen oder verbalen Form für einen speziellen Zeitraum dargestellt wird, um zu ermöglichen, dass die Ernteentscheidung innerhalb dieses speziellen Zeitraums getroffen wird.

12. Verfahren nach Anspruch 1, **dadurch gekennzeichnet, dass** die Vergleichsdaten Fallzahldaten sind, die an landwirtschaftlichen Referenzbetrieben oder Messstationen gemessen wurden.

13. Verfahren nach Anspruch 1, **dadurch gekennzeichnet, dass** die Vergleichsdaten Fallzahldaten sind, die an dem nächstgelegenen landwirtschaftlichen Referenzbetrieb gemessen wurden.

14. Verfahren nach Anspruch 1, **dadurch gekennzeichnet, dass** das für die Vorhersage benutzte Berechnungsprogramm angepasst wird, um eine geeignete Referenzstation mit Bezug auf den Standort der Kultur zu finden.

15. Verfahren nach Anspruch 1 oder 14, **dadurch gekennzeichnet, dass** das für die Vorhersage benutzte Berechnungsprogramm angepasst wird, um die Eingabedaten mit den Daten aus den Referenzstationen zu vergleichen.

16. Verfahren nach Anspruch 1, 14 oder 15, **dadurch gekennzeichnet, dass** das für die Vorhersage benutzte Berechnungsprogramm angepasst wird, um das Berechnungsergebnis durch Minimieren der Summe von Quadraten der berechneten und gemessenen Fallzahlen zu kalibrieren.

17. Verfahren nach Anspruch 1, **dadurch gekennzeichnet, dass** die Berechnung der Vorhersage über das Internet ausgeführt wird, wobei die Berechnungs-Software in einem Internet-Server und deren Kundenversion an einem Endgerät eingerichtet ist, das mit dem Server verbunden ist.

18. Verfahren nach Anspruch 1, **dadurch gekennzeichnet, dass** das Berechnungsprogramm angepasst ist, Informationen für die Ernteentscheidung an ein mobiles Kommunikationsmittel des Nutzers eines Berechnungsprogramms zu senden.

19. Optimieren der Fallzahl einer Kultur und/oder Maximieren ihres Ertrags mithilfe des Verfahrens nach Anspruch 1.

20. Vorrichtung zur Bestimmung einer Erntezeit für Kulturen, **dadurch gekennzeichnet, dass** die Vorrichtung ein Berechnungsprogramm zur Bestimmung einer lokalen Echtzeit-Fallzahlvorhersage für eine Kultur umfasst, wobei das Berechnungsprogramm angepasst ist, die für die Kultur berechnete Fallzahl mit einer Referenzfallzahl zu vergleichen, um die lokale Echtzeit-Fallzahlvorhersage festzulegen.

21. Vorrichtung nach Anspruch 20, **dadurch gekennzeichnet, dass**
a. Daten über die Wachstumseigenschaften der Kultur,
b. Daten über den Standort der Kultur,
c. lokale Wetterdaten für den Standort der Kultur und
d. Vergleichsdaten zur Bestimmung einer Fallzahlvorhersage
als Eingabedaten für das Berechnungsprogramm verwendet werden.

22. Vorrichtung nach Anspruch 20, **dadurch gekennzeichnet, dass** das Berechnungsprogramm angepasst wird, um die Fallzahlvorhersage durch Minimieren der Summe von Quadraten der berechneten und der Referenzfallzahlen zu kalibrieren.

23. System zur Bestimmung einer Erntezeit für Kulturen, **dadurch gekennzeichnet, dass** das System Mittel zur Bestimmung einer lokalen Echtzeit-Fallzahlvorhersage für eine Kultur unter Verwendung von
a. Daten über die Wachstumseigenschaften der Kultur,
b. Daten über den Standort der Kultur,
c. lokalen Wetterdaten für den Standort der Kultur und
d. Vergleichsdaten zur Bestimmung der Fallzahlvorhersage
als Eingabedaten umfasst.

24. Berechnungsprogramm zur Bestimmung einer Erntezeit für Kulturen, **dadurch gekennzeichnet, dass** das Berechnungsprogramm Mittel zur Bestimmung einer lokalen Echtzeit-Fallzahlvorhersage für eine Kultur unter Verwendung von
a. Daten über die Wachstumseigenschaften der Kultur,
b. Daten über den Standort der Kultur,
c. lokalen Wetterdaten für den Standort der Kultur und
d. Vergleichsdaten zur Bestimmung der Fallzahlvorhersage
als Eingabedaten umfasst.

## Revendications

1. Procédé pour déterminer un moment de moisson, **caractérisé en ce qu'**une prévision de l'indice de chute local en temps réel est déterminée séparément pour chaque culture à l'aide d'un programme informatique, dans lequel
a. des données concernant des propriétés de croissance de la culture,
b. des données sur le lieu de la culture,
c. des données météorologiques locales pour le lieu de la culture, et
d. des données comparatives
sont utilisées en tant que données d'entrée afin de déterminer la prévision de l'indice de chute, et les prévisions d'indice de chute pour différentes cultures pouvant être comparées les unes aux autres et/ou avec une valeur cible prédéterminée afin de déterminer la décision de moissonner.

2. Procédé selon la revendication 1, **caractérisé en ce que** ladite prévision de l'indice de chute est déterminée plus d'une fois à différents moments en utilisant des données locales pour ces différents moments en tant que données d'entrée.

3. Procédé selon la revendication 1, **caractérisé en ce que** des données sur la culture comprennent au moins des données concernant la variété et la date du début de la croissance.

4. Procédé selon la revendication 3, **caractérisé en ce que** lesdites données sur la variété concernent la variété de céréale, de préférence du blé, du seigle, ou du triticale.

5. Procédé selon la revendication 3, **caractérisé en ce que** les données sur la date du début de la croissance sont la date de semis pour les céréales de printemps et la date de début de la période de croissance pour les céréales d'automne.

6. Procédé selon la revendication 1, **caractérisé en ce que** des données sur le lieu de la culture concernent l'emplacement de l'exploitation agricole ou le secteur du champ.

7. Procédé selon la revendication 1, **caractérisé en ce que** les données météorologiques locales comprennent des données météorologiques et/ou des données de prévisions météorologiques obtenues.

8. Procédé selon la revendication 7, **caractérisé en ce que** lesdites données météorologiques locales comprennent les précipitations et la température locales pour un lieu spécifique respectivement au cours d'une période spécifiée ou à un moment spécifié.

9. Procédé selon la revendication 1, **caractérisé en ce que** la valeur cible est l'indice de chute estimé à l'avance, ou souhaité par l'agriculteur, pour la culture.

10. Procédé selon la revendication 9, **caractérisé en ce que** la valeur cible est caractéristique pour la variété définie par l'agriculteur.

11. Procédé selon la revendication 1, **caractérisé en ce que** ladite prévision de l'indice de chute est présentée sous une forme graphique, alphanumérique ou verbale pour une période spécifique de temps permettant de prendre la décision de moissonner au cours de cette période spécifique de temps.

12. Procédé selon la revendication 1, **caractérisé en ce que** des données comparatives sont des données d'indices de chute mesurés au niveau d'exploitations agricoles de référence ou de stations de mesure.

13. Procédé selon la revendication 1, **caractérisé en ce que** des données comparatives sont des données d'indice de chute mesurés au niveau de l'exploitation agricole de référence la plus proche.

14. Procédé selon la revendication 1, **caractérisé en ce que** le programme informatique utilisé pour la prévision est ajusté pour trouver une station de référence adéquate compte tenu de l'emplacement de la culture.

15. Procédé selon la revendication 1 ou 14, **caractérisé en ce que** le programme informatique utilisé pour la prévision est ajusté afin de comparer les données d'entrée avec des données des stations de référence.

16. Procédé selon les revendications 1, 14 ou 15, **caractérisé en ce que** le programme informatique utilisé pour la prévision est ajusté afin de calibrer le résultat de calcul en minimisant la somme des carrés des indices de chute calculé et mesuré.

17. Procédé selon la revendication 1, **caractérisé en ce que** le calcul de la prévision est effectué via internet, le logiciel de calcul se trouvant sur un serveur internet et la version client de celui-ci sur un terminal connecté audit serveur.

18. Procédé selon la revendication 1, **caractérisé en ce que** le programme informatique est ajusté pour envoyer de l'information concernant la décision de moissonner à un moyen de communication mobile d'un utilisateur d'un programme informatique.

19. Optimisation de l'indice de chute d'une culture et/ou maximisation de la production de celle-ci à l'aide du procédé selon la revendication 1.

20. Appareil pour déterminer un moment de moisson pour des cultures, **caractérisé en ce que** ledit appareil comprend un programme informatique pour déterminer une prévision de l'indice de chute local en temps réel pour une culture, dans lequel le programme informatique est ajusté pour comparer l'indice de chute calculé pour la culture avec un indice de chute de référence afin de déterminer la prévision de l'indice de chute local en temps réel.

21. Appareil selon la revendication 20, **caractérisé en ce que**
a. des données concernant des propriétés de croissance de la culture,
b. des données sur le lieu de la culture,
c. des données météorologiques locales pour le lieu de la culture, et
d. des données comparatives pour déterminer une prévision d'indice de chute
sont utilisées en tant que données d'entrée pour le programme informatique.

22. Appareil selon la revendication 20, **caractérisé en ce que** le programme informatique est ajusté pour calibrer la prévision de l'indice de chute en minimisant la somme des carrés des indices de chute calculé et de référence.

23. Système afin de déterminer un moment de la moisson pour des cultures, **caractérisé en ce que** ledit système comprend des moyens pour déterminer une prévision d'indice de chute local en temps réel pour une culture en utilisant
a. des données de culture,
b. des données sur le lieu de la culture,
c. de données météorologiques locales pour le lieu de culture, et
d. des données comparatives, afin de déterminer la prévision de l'indice de chute, en tant que données d'entrée.

24. Programme informatique pour déterminer un moment de moisson pour des cultures, **caractérisé en ce que** ledit programme informatique comprend des moyens afin de déterminer une prévision de l'indice de chute local en temps réel pour une culture en utilisant
a. des données sur les propriétés de croissance de la culture,
b. des données sur le lieu de la culture,
c. des données météorologiques locales pour le lieu de la culture, et
d. des données comparatives, afin de déterminer la prévision de l'indice de chute, en tant que données d'entrée.
